# EUROPEAN PATENT APPLICATION

(11) **EP 3 076 016 A1**
(43) Date of publication of application: **05.10.2016**
(21) Application number: 13896908.4
(22) Date of filing: 05.11.2013
(51) Int. Cl.: F03G 7/08, F01L 1/04, F01L 1/46, F01L 3/02, F01L 3/10, F01L 3/22, F02B 77/00

(54) **INTERNAL COMBUSTION ENGINE WITH POWER-GENERATING MEMBER**

(71) Applicant: Nittan Valve Co., Ltd., Hadano-shi, Kanagawa 257-0031 (JP)
(72) Inventor: LEE, Tai-Hwan, Hadano-shi Kanagawa 257-0031 (JP); KAMEDA, Michihiro, Hadano-shi Kanagawa 257-0031 (JP)
(74) Representative: Herrmann, Uwe
(86) International application number: PCT/JP2013/079870
(87) International publication number: WO 2015/068199

(57) **Abstract**

[Problems to be solved]

There is known means for converting the vibration energy of the body of a road vehicle to electrical energy, thereby improving the fuel efficiency of the vehicle but since these means cannot collect energy when an internal combustion engine is idling, they are not satisfactory as energy collecting means. Thus, it is a problem to be solved by the present invention to provide an internal combustion engine equipped with an electrical power generating member which can efficiently convert the vibration energy to electrical energy and can prevent spaces occupied by a piezoelectric element, rectifier and other power circuit components.

[Solution]

The problem can be solved by an internal combustion engine of a road vehicle, which is an internal combustion engine equipped with an electrical power generating member, the electrical power generating member is provided in a passive member subjected to the motion of an actuating member constituting a component of the internal combustion engine and the electrical power generating member is constituted to generate electrical power in response to motion of the actuating member and store the generated electrical power in an electrical storage device.

## Description

### FIELD OF THE INVENTION

The present invention relates to an internal combustion engine equipped with an electrical power generating member.

### BACKGROUND ART OF THE INVENTION

In order to reduce amount of carbon dioxide discharged from a vehicle, there have been made many proposals for improving fuel efficiency of a vehicle utilizing an internal combustion engine by not only vehicle manufacturers but also car parts manufacturers and fuel companies. For instance, considerable fuel efficiency can be improved considerably in a hybrid vehicle by converting kinetic energy during deceleration to electrical energy using a regenerative brake, and storing the electrical energy obtained in a secondary battery.

Further, in addition to the aforesaid fuel efficiency improving methods, it is possible to adopt means disclosed in Patent Publication No. 1 or Patent Publication No. 2. More specifically, Patent Publication No. 1 and Patent Publication No. 2 disclose means for improving vehicle fuel efficiency by converting vibration energy which is one kind of kinetic energy, to electrical energy using a piezoelectric element and storing it in a secondary battery.

### PRIOR PUBLICATIONS

### PATENT PUBLICATIONS

Patent Publication No. 1: Japanese Patent Application Laid Open No. 2011-41344
Patent Publication No. 2: Japanese Patent Application Laid Open No. 2008-30640

### DISCLOSURE OF THE INVENTION

### PROBLEMS TO BE SOLVED BY THE INVENTION

However, since the solutions disclosed in Patent Publication No. 1 and Patent Publication No. 2 are constituted so as to convert vibration energy generated while operating a vehicle to electrical energy, energy during idling of an internal combustion cannot be recovered and, therefore, energy cannot be sufficiently recovered.

Further, in Patent Publication No. 1 and Patent Publication No. 2, since the maximum amplitude of vibration of a physical object whose vibration energy is to be recovered is great, it is necessary to design a piezoelectric element, a power circuit and the like so as to withstand a large maximum amplitude. Therefore, the sizes of the piezoelectric element and power circuit components become too large relative to recoverable electrical energy.

Therefore, it is an object of the present invention to provide an internal combustion engine equipped with an electrical power generating member that can efficiently convert vibration energy to electrical energy even when the internal combustion engine is idling and minimize size increase of the piezoelectric element and power circuit components such as a rectifier.

### MEANS FOR SOLVING PROBLEMS

The above object of the present invention can be accomplished by adopting the following technical means.

Specifically, an invention defined in Claim 1 is directed to an internal combustion engine of a road vehicle, which is an internal combustion engine equipped with an electrical power generating member, wherein the electrical power generating member is provided in a passive member subjected to the motion of an actuating member constituting a component of the internal combustion engine and the electrical power generating member is constituted to generate electrical power in response to the motion of the actuating member and store the generated electrical power in an electrical storage device.

Further, an invention defined in Claim 2 is directed to an internal combustion engine equipped with an electrical power generating member in accordance with Claim 1, wherein the actuating member is constituted by a valve and the passive member is constituted by a valve seat with which the valve comes into contact.

Furthermore, an invention defined in Claim 3 is directed to an internal combustion engine equipped with an electrical power generating member in accordance with Claim 2, wherein the actuating member is constituted by a biasing member for assisting reciprocating movement of the valve and the passive member is constituted by a passive portion of the biasing member.

Moreover, an invention defined in Claim 4 is directed to an internal combustion engine equipped with an electrical power generating member in accordance with Claim 1, wherein the actuating member is constituted by a camshaft and the passive member is constituted by a camshaft support member for supporting the camshaft and a fixing bolt for fixing the camshaft support member and wherein the electrical power generating member is provided in the fixing bolt.

### TECHNICAL EFFECTS OF THE INVENTION

According to the invention defined in Claim 1, since the electrical power generating member is provided in the passive member subjected to the motion of the actuating member constituting a component of an internal combustion engine of a road vehicle, even when the internal combustion engine is idling, the vibration energy can be converted to electrical energy, thereby improving fuel efficiency of the road vehicle. In addition, since the electrical power generating member is provided in the passive member subjected to the motion of the actuating member, the displacement of the electrical power generating member falls within a certain range, thereby minimizing space occupied by the rectifier and other power circuit components.

According to the invention defined in Claim 2, in addition to the technical advantage obtained by the invention defined in Claim 1, since the actuating member is constituted by the valve and the passive member is constituted by the valve seat with which the valve comes into contact so that the operation direction of the valve is constant, the vibration energy of the valve can be efficiently converted to electrical energy. In addition, in the case where an electrical circuit is modified so that the electrical power generating member is made to correspond to an actuating member, it is possible to decrease vibration and noise because the electrical power generating member can serve as an impact damper.

Further, since the magnitude of the actuating force of the valve is within a certain range, generated electrical power is kept within a certain range. Thus, since the capacities of the power circuit components need not to be set excessively high, the space for them can be reduced.

According to the invention defined in Claim 3, in addition to the technical advantage obtained by the invention defined in Claim 1, since the actuating member is constituted by a biasing member for assisting reciprocating movement of the valve and the passive member is constituted by a passive portion of the biasing member, the operating direction of the actuating member is constant, whereby the vibration energy of the actuating member can be efficiently converted to electrical energy. Further, since the magnitude of the actuating force of the biasing member is within a certain range, generated electrical power is kept within a certain range. Thus, since the capacities of the power circuit components need not to be set excessively high, the space for them can be reduced.

According to the invention defined in Claim 4, even when an internal combustion engine is idling, the vibration energy of the camshaft which is the actuating member can be converted to electrical energy, thereby improving fuel efficiency of the road vehicle. Moreover, since the electrical power generating member is provided in the fixing bolt which is a passive member, the deformation amount of the electrical power generating member provided in the fixing bolt, the deformation amount of the electrical kptpower generating member is limited within a certain range, thereby minimizing the space occupied by rectifier and other power circuit components.

### BRIEF DESCRIPTION OF THE DRAWINGS

[Figure 1]

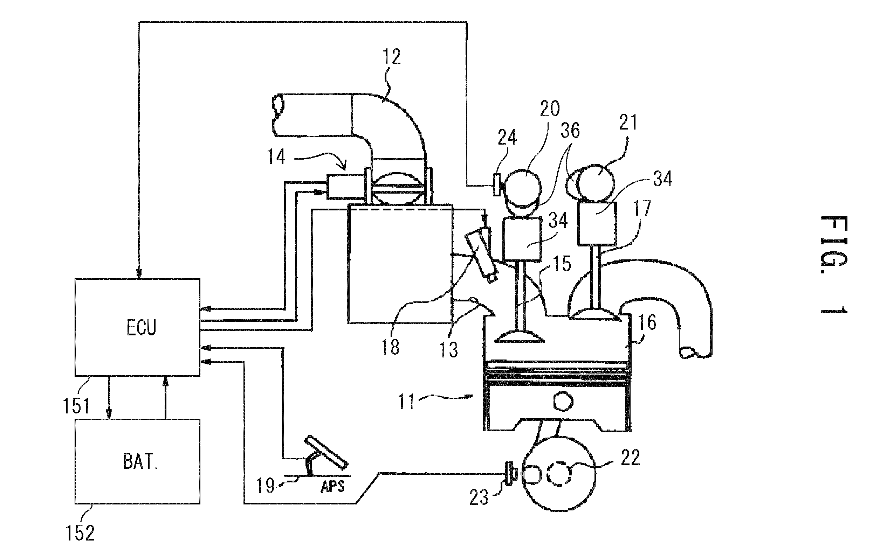

   Figure 1 is a schematic view showing a configuration in the vicinity of a road vehicle internal combustion engine that is a first preferred embodiment of the present invention.
[Figure 2]

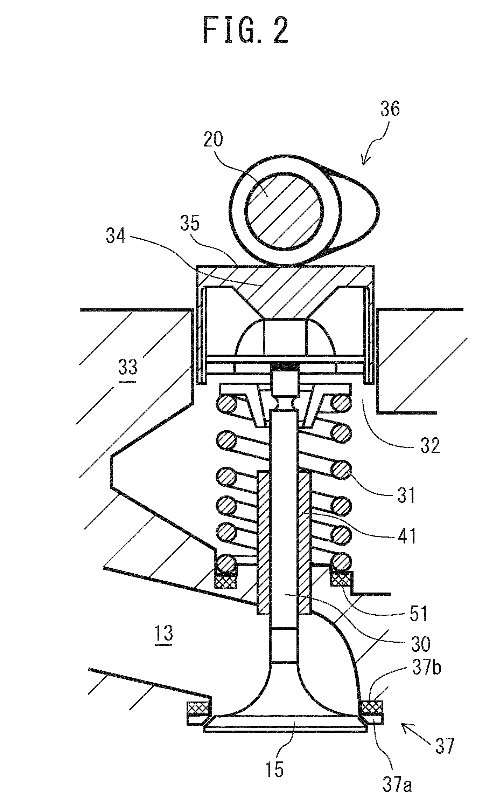

   Figure 2 is a schematic side cross sectional view for showing a configuration in the vicinity of an intake valve of an internal combustion engine shown in Figure 1.
[Figure 3]

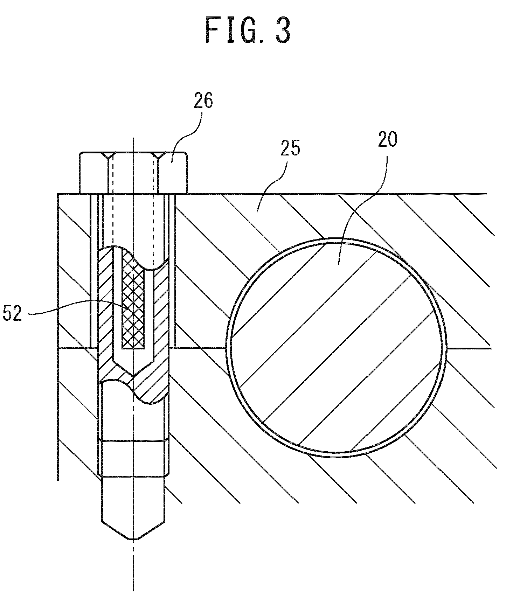

   Figure 3 is a schematic drawing showing a configuration in the vicinity of a camshaft of an internal combustion engine shown in Figure 1.
[Figure 4]

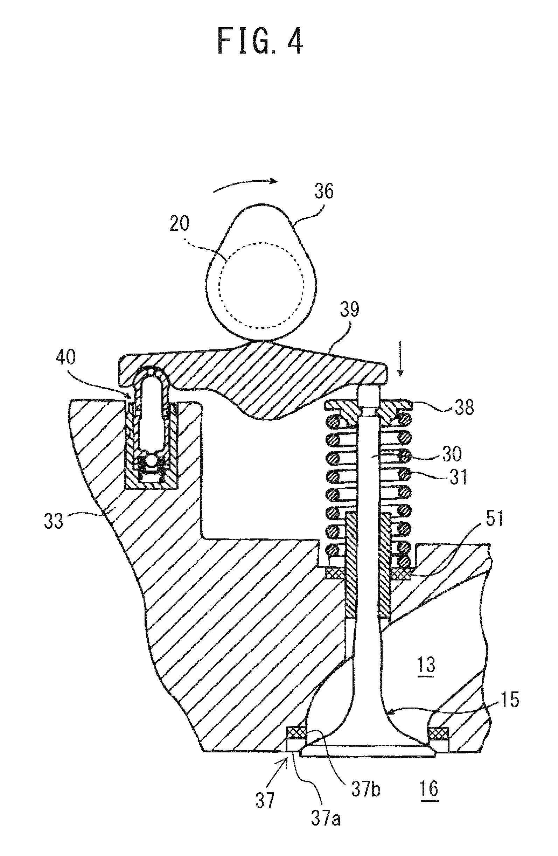

   Figure 4 is a schematic side cross sectional view showing a configuration in the vicinity of an intake valve of an internal combustion engine that is a second preferred embodiment of the present invention.

### PREFERRED EMBODIMENTS OF THE INVENTION

Preferred embodiments of the present invention configured based on the above described technical ideas will be explained below in detail referring to the accompanying drawings.

Figure 1 is a schematic view showing a configuration in the vicinity of a road vehicle internal combustion engine that is a preferred embodiment of the present invention. In Figure 1, an internal combustion engine 11 is constituted to burn fuel in a combustion chamber 16 of the internal combustion engine 11, push a piston in the combustion chamber 16 by heat energy generated by combustion of fuel and produce kinetic energy for rotating running wheels. Intake air is inspired into the combustion chamber 16 via an intake valve 15 through an intake pipe 12 in which an electrically controlled throttle valve 14 is disposed. On the other hand, exhaust gas produced by combustion of fuel is discharged from the combustion chamber 16 via an exhaust valve 17 and discharged into atmospheric air after purification. The intake valve 15 and the exhaust valve 17 are opened and closed by cams 36 provided on an intake camshaft 20 and an exhaust camshaft 21, respectively. More specifically, a valve mechanism including the intake valve 15 and exhaust valve 17 is constituted to transmit the rotation of a crankshaft 22 to the intake camshaft 20 and the exhaust camshaft 21 using chains or the like, respectively, and rotate the camshaft 20 and the camshaft 21, thereby opening and closing the intake valve 15 and the exhaust valve 17 at appropriate times in accordance with the firing order. The internal combustion engine according to the first embodiment of the present invention is constituted so as to directly push valve lifters 34 disposed at one end of the intake valve 15 and at one end of the exhaust valve 17 using rotation of the camshaft 20 and rotation of the camshaft 21, thereby mechanically driving the intake valve 15 and the exhaust valve 17.

An electromagnetic fuel injection valve 18 is provided at an intake port upstream of the intake valve 15 of each cylinder. The fuel injection valve 18 is opened by an injection pulse signal from an engine control unit (ECU) 151 and is configured to inject fuel adjusted to a predetermined pressure toward the intake valve 15.

The ECU 151 has a built-in microcomputer that receives input of detection signals from various sensors. The ECU 151 performs arithmetic processing based on various detection signals so as to control the electrically controlled throttle 14, the fuel injection valve 18 and the like. The ECU 151 is powered by an electrical storage device 152 and, on the other hand, receives detection signals from a charge sensor and the like to control the electrical storage device 152.

Illustrative examples of the various sensors include an accelerator position sensor 19 for detecting accelerator pedal depression angle, a crank angle sensor 23 for obtaining a rotation signal from the crankshaft 22, a cam angle sensor 24 for obtaining a rotation signal from the intake camshaft 20.

Figure 2 is a side cross sectional view for showing a configuration in the vicinity of the intake valve 15 of the internal combustion engine 11 in accordance with a first preferred embodiment of the present invention. Figure 2 shows a small diameter portion of a cam 36 provided on the intake camshaft 20 in a state making contact with a cam sliding surface 35 at a time, when the intake port 13 is closed by the intake valve 15. Each of the camshafts 20 and 21 is provided in an axial direction with a plurality of cams 36 each of which has an appropriate cam contour curve and linearly reciprocates the intake valve 15 or the exhaust valve 17 in contact therewith periodically. Each of the cam generally has an arcuate shape, namely, an oval shape, and the difference in diameter between a large diameter portion and a small diameter portion corresponds to the lift of the valve 15 or 17.

The intake valve 15 according to the first preferred embodiment is inserted into a cylinder bore 32 formed in the cylinder head 33 and a valve stem 30 constituting the shaft of the intake valve 15 is supported by a cylindrical valve guide 41 fixed to the cylinder head 33. The sealing performance of the intake valve 15 is ensured by pressing the outer circumstance portion of a trumpet-shaped portion formed at the lower end portion onto a valve seat 37 formed in the cylinder head 33 using a coil spring 31 made of metal. The coil spring 31 is compressed by directly pressing with the cam 36 onto the upper surface of the valve lifter 34 provided on the upper end portion of the intake valve 15. As a result, the intake valve 15 is operated downwardly in the axial direction of the valve stem 30 against the spring force of the coil spring 31, whereby intake air is fed into the combustion chamber 16 from the intake port 13.

The valve seat 37 provided as a passive member of the intake valve 15 which is an actuating member constituting a component of the internal combustion engine 11, includes a valve contact portion 37a that is contacted by the outer circumference of the trumpet-shaped portion of the intake valve 15 and a first electrical power generating member 37b integrally formed with the valve contact portion 37a. The first electrical power generating member 37b is formed of a laminated piezoelectric element made of ceramic and is constituted to generate an electromotive force when it is subjected to a compressing force along the axial direction of the intake valve 15. The first electrical power generating member 37b has a flattened doughnut shape with respect to the axial direction and piezoelectric elements are uniformly disposed in the doughnut shape portion. Electrical power generated by the first electrical power generating member 37b is stored in the electrical storage device 152 of the road vehicle using a known power circuit (not shown) such as a rectifier circuit including diodes and the like. Here, although Figure 2 shows only a side cross sectional view of the intake valve 15, a first electrical power generating member 37b may also be provided in a valve seat 37 on the side of the exhaust valve 17.

Further, a second electrical power generating member 51 is provided in the passive portion of the coil spring 31 which is a biasing member for assisting the reciprocation movement of the intake valve 15. The coil spring 31 is an actuating member constituting a component of the internal combustion engine 11. This second electrical power generating member 51 has the same shape as that of the first electrical power generating member 37b and is formed of the same material as that of the first electrical power generating member 37b and electrical power generated by the second electrical power generating member 51 is stored in the electrical storage device 152. Here, although Figure 2 shows that the second electrical power generating member 51 and the coil spring 31 are in contact with each other, it is possible to interpose a member having high abrasion resistance such as a metallic washer between the second electrical power generating member 51 and the coil spring 31.

Figure 3 is a schematic drawing showing a configuration in the vicinity of the camshaft support member 25 of the intake camshaft 20 of the internal combustion engine according to the first preferred embodiment of the present invention. In Figure 3, the opposite end portions of the intake camshaft 20 are pivotally supported by a camshaft support member 25 including a journal bearing and the camshaft support member 25 is fixed to the internal combustion engine 11 by fixing bolts. The intake camshaft 20 is an actuating member constituting a component of the internal combustion engine 11 and the camshaft support member 25 for supporting the intake camshaft 20 and the fixing bolts 26 correspond to passive members subjected to motion of the intake camshaft 20 as the actuating member. In this preferred embodiment, as shown in Figure 3, a bore is drilled downward into the fixing bolt 26 from above and a third electrical power generating member 52 is provided in the bore. The third electrical power generating member 52 is formed of a known piezo film. Every time the intake camshaft 20 is rotated and the cam 36 presses the valve lifter 34, so that the fixing bolt 26 is displaced up and down, thereby generating electrical power. The thus generated electrical power is stored in the electrical storage device 152. Here, although only the intake camshaft 20 is shown in Figure 3, a third electrical power generating member 52 may be also provided in a bore formed in the fixing bolt 26 for fixing the camshaft support member 25 of the exhaust side camshaft 21 or the crankshaft 22 and it is further possible to provide a third electrical power generating member 52 in a fixing bolt 26 for mounting the internal combustion engine 11 on the road vehicle.

According to this preferred embodiment, since the electrical power generating member is provided in the passive member subjected to the motion of the actuating member constituting a component of the internal combustion engine 11 of the road vehicle, even when the internal combustion engine 11 is idling, the vibration energy can be converted to electrical energy, whereby fuel efficiency of the road vehicle can be improved. In addition, since the electrical power generating member is provided in the passive member subjected to the motion of the actuating member, the displacement amount of the electrical power generating member can be kept within a certain range and, therefore, it is possible to prevent space occupied by rectifier and other power circuit components from becoming large.

In the case where the actuating member is constituted by the valve 15 or 17 and the passive member is constituted by the valve seat 37 with which the valve 15 or 17 comes into contact, since the operating direction of the valve 15 or 17 is constant, the vibration energy of the valve 15 or 17 can be efficiently converted to electrical energy and in the case where an electrical circuit is modified so that the electrical power generating member is made to correspond to an actuating member, the electrical power generating member can serve as an impact damper, thereby enabling suppression of vibration and noise.

Further, since the actuating force of the valve 15 or 17 falls within a certain range, the generated power can be kept within a certain range. Therefore, since the capacities of the power circuit components need not be set excessively high, the space for them can be reduced.

In the case where the actuating member is the biasing member for assisting the reciprocating movement of the valve and the passive member is constituted by a passive portion of the actuating member, since the operation direction of the biasing member is constant, the vibration energy can be efficiently converted to electrical energy. Further, since the actuating force of the actuating member falls within a certain range, the generated power can be kept within a certain range. As a result, the capacities of power circuit components need not be set excessively high, the space for them can be reduced.

In this embodiment, since the camshafts 20 21 are in operation during idling, vibration energy can be converted to electrical energy even when the internal combustion engine is idling, whereby the fuel efficiency of the road vehicle can be improved. Further, since the electrical power generating member is provided in the fixing bolt subjected to the actuating force, it is possible to prevent space occupied by rectifier and other power circuit components from becoming large.

Figure 4 is a schematic side cross sectional view for showing a configuration in the vicinity of an intake valve of an internal combustion engine which is a second preferred embodiment of the present invention.

The internal combustion engine 11 according to this embodiment and the internal combustion engine 11 according to the first embodiment are different in that a rocker arm 39 is swingably provided between the intake camshaft 20 and the one end portion of the valve stem 30 of the intake valve 15 and that a hydraulic lash adjuster 40 is provided at a portion corresponding to the pivot point of the rocker arm 39 in the cylinder head 33. The provision of the rocker arm 39 is advantageous in that the lift amount of the valve can be set larger than the difference between the large diameter and the small diameter of the cam 36.

Similarly to the first embodiment, a doughnut shaped valve seat 37 provided at a circumferential portion of the intake port 13 has a valve contact portion 37a and a first electrical power generating member 37b. Further, a second electrical power generating member 51 is provided in the passive portion of the coil spring 31 which is a biasing member for assisting the reciprocating movement of the intake valve 15. In the valve mechanism using the rocker arm 39, electrical energy can be stored using the electrical power generating member 37 and the like.

### EXPLANATION OF REFERENCE NUMERALS

- 11: an internal combustion engine
- 12: an intake pipe
- 13: an intake port
- 14: an electric control throttle valve
- 15: an intake valve
- 16: a combustion chamber
- 17: an exhaust valve
- 18: a fuel injection valve
- 19: an accelerator position sensor
- 20: an intake camshaft
- 21: an exhaust camshaft
- 22: a crankshaft
- 23: a crank angle sensor
- 24: a cam angle sensor
- 25: a camshaft support member
- 26: a fixing bolt
- 30: a valve stem
- 31: a coil spring
- 32: a cylinder bore
- 33: a cylinder head
- 34: a valve lifter
- 35: a cam sliding surface
- 36: a cam
- 37: a valve seat
- 37a: a valve contact portion
- 37b: a first electrical power generating member
- 39: a rocker arm
- 40: a hydraulic lash adjuster
- 41: a valve guide
- 51: a second electrical power generating member
- 52: a third electrical power generating member
- 151: an engine control unit
- 152: an electrical storage device

## Claims

1. An internal combustion engine of a road vehicle, which is an internal combustion engine equipped with an electrical power generating member, wherein
the electrical power generating member is provided in a passive member subjected to motion of an actuating member constituting a component of the internal combustion engine and
the electrical power generating member is constituted to generate electrical power in response to motion of the actuating member and store the generated electrical power in an electrical storage device.

2. An internal combustion engine equipped with an electrical power generating member in accordance with Claim 1, wherein
the actuating member is constituted by a valve and
the passive member is constituted by a valve seat with which the valve comes into contact.

3. An internal combustion engine equipped with an electrical power generating member in accordance with Claim 2, wherein
the actuating member is constituted by a biasing member for assisting reciprocating movement of the valve and
the passive member is constituted by a passive portion of the biasing member.

4. An internal combustion engine equipped with an electrical power generating member in accordance with Claim 1, wherein
the actuating member is constituted by a camshaft and
the passive member is constituted by a camshaft support member for supporting the camshaft and a fixing bolt for fixing for the camshaft support member, and wherein
the electrical power generating member is provided in the fixing bolt.
